# EUROPEAN PATENT SPECIFICATION

(11) **EP 1 735 371 B1**
(45) Date of publication and mention of the grant of the patent: **07.07.2010**
(21) Application number: 05720432.3
(22) Date of filing: 03.03.2005
(51) Int. Cl.: C08J 3/12, F26B 17/00

(54) **METHOD FOR PRODUCING COMPOSITION CONTAINING POLYMER FROM LIQUID CONTAINING POLYMER COMPONENT AND DRYING APPARATUS FOR SAME**
VERFAHREN ZUR HERSTELLUNG EINER POLYMER ENTHALTENDEN ZUSAMMENSETZUNG AUS EINER EINE POLYMERKOMPONENTE ENTHALTENDEN FLÜSSIGKEIT UND TROCKNUNGSVORRICHTUNG DAFÜR
PROCEDE DESTINE A PRODUIRE UNE COMPOSITION CONTENANT UN POLYMERE A PARTIR D'UN LIQUIDE CONTENANT UN CONSTITUANT POLYMERE ET APPAREIL DE SECHAGE ASSOCIE

(30) Priority: 12.04.2004 JP 2004116665; 09.12.2004 JP 2004356690
(43) Date of publication of application: 27.12.2006
(73) Proprietor: THE YOKOHAMA RUBBER CO., LTD., Tokyo 105-8685 (JP)
(72) Inventor: KANENARI, Daisuke, The Yokohama Rubber Co., Ltd, Hiratsuka-shi, Kanagawa 254-8601 (JP); KIRINO, Yoshiaki, The Yokohama Rubber Co., Ltd., Hiratsuka-shi, Kanagawa 254-8601 (JP)
(74) Representative: HOFFMANN EITLE
(86) International application number: PCT/JP2005/004161
(87) International publication number: WO 2005/100455

(56) References cited:
- EP-A- 1 306 424
- US-A- 4 859 248
- US-A- 5 842 289
- PATENT ABSTRACTS OF JAPAN vol. 2000, no. 01, 31 January 2000 (2000-01-31) & JP 11 292978 A (DAINIPPON INK & CHEM INC), 26 October 1999 (1999-10-26)

## Description

### TECHNICAL FIELD

The present invention relates to a method for producing a natural rubber composition containing.a filler from a liquid containing a natural rubber component and a liquid containing a filler (e.g., carbon black, silica) at a good productivity and heat efficiency, without causing degradation of the quality of the natural rubber component and to a rubber/filler masterbatch obtained therefrom.

### BACKGROUND ART

A method for mixing a latex or organic solution of a rubber and a filler in the liquid states and removing the solvent therefrom to obtain a master batch or rubber composition is known (for example, see JP-A-1-198695 (Kokai), JP-A-2000-239397 (Kokai), and JP-A-2003-321551 (Kokai). In particular, when dispersing water glass, colloidal silica, clay, in a polymer, the polymer and filler is dispersed in water or an organic solvent, then the solvent is removed, but this method requires a long time and there are the unavoidable phenomena that an organic solvent has to be used, variation in quality occurs due to the amount of solvent at the surface parts and inside, and the filler causes agglomeration. Further, JP-A-2000-239397 propose a method for charging a composition containing a solvent into a high temperature and high shear mixer and vaporizing and removing the moisture while mixing. Also in this case, there was the defect that exposure to a high temperature is liable to cause a decrease in the physical properties of the polymer and molecular cleavage due to the high shear.

As conventional methods for producing a rubber/colloidal silica master batch, for example, the freeze drying method (i.e., (1) freezing, (2) thawing and coagulation, and (3) drying, of latex/colloidal.silica), the alcohol coagulation method (i.e., (1) charging of latex/colloidal silica into an alcohol for coagulation and (2) cleaning and drying) are known, but the former has the problem of a long freezing and thawing time or drying time, poor dispersion of silica, whereas the latter has the problem that it requires the use of a large amount of an alcohol, has a long drying time, and does not allow blending of.solvent-soluble components.

Further, Japanese Unexamined Patent Publication (Kokai) No. 2004-66204 discloses technology for mixing a filler and polymer latex and applying an ultrasonic wave to the mixture thus obtained to separate the clump-like substances of filler and polymer, but even with this method, while it becomes easier to separate the solvent (e.g. water) from the rubber and remove the solvent, it becomes impossible to completely remove the moisture until after a step of drying upon heat. A large number of problems remain in terms of the processing time and heat history.

At present, natural rubber (NR) is obtained by tapping sap from rubber trees by hand, filtering it, then coagulating and pressing the latex and shipping the resultant products out as sheets (i.e., RSS) or blocks (i.e., TSR). In this way, even at present, where the importance of natural rubber is conversely increasing, manual labor is still relied on to produce NR from rubber latex. Further, the process of the latex coagulation step, the rinsing step, and the drying step, in particular the drying step, has a great effect on the final viscosity of the resultant rubber. From the viewpoint of the variation in rubber quality, the current method for producing rubber from rubber latex cannot be said to be sufficient. From this viewpoint, JP-A-2003-26704 (Kokai) proposes a method of production enabling an improvement of the productivity and quality. Further, a carbon black master batch of natural rubber (NR) is difficult to mix in the slurry state due to the instability of the latex. JP-A-2000-507892 discloses a method of simultaneously spraying and solidifying an NR latex and carbon black slurry and removing water, while mixing to produce an NR master batch. However, although this method features a good dispersability of carbon black for mixing at a high temperature as a drying step, problems remain in the physical properties of the rubber due to the heat history.

### DISCLOSURE OF INVENTION

Accordingly, the object of the present invention is to provide a method for producing a natural rubber composition containing a liquid containing a natural rubber component, for example, a polymer latex, in particular a natural rubber latex and containing a filler (e.g., carbon black, silica), wherein the work efficiency or heat efficiency is greatly improved and the heat degradation or gelling of the natural rubber liable to occur in conventional drying by heating is suppressed so as to produce a superior quality natural rubber composition containing a filler (e.g., a natural rubber/carbon black master batch).

In accordance with the first aspect of the present invention, there is provided a method for producing a natural rubber composition containing a filler comprising simultaneously spraying and drying a liquid containing a natural rubber component and a liquid containing a filler under an atmosphere of a shock wave generated from pulse combustion and a natural rubber composition containing a filler obtained therefrom.

In accordance with to the first aspect of the present invention, there is provided a method for producing a natural rubber composition further comprising mixing the filler or the filler-containing liquid with a liquid containing said naturel rubber component before spraying, followed by spraying.

According to the first aspect of the present invention, since, instead of the conventional processes of coagulation by acid, natural coagulation, pulse combustion is used to cause the liquid including a natural rubber, for example, a natural rubber latex, to instantaneously dry, a great improvement in the productivity and heat efficiency is achieved. Further, since heat degradation or gelling or the natural rubber causing due to conventional drying upon heating is suppressed, the control of the natural rubber quality becomes far easier. Further, since gelling is suppressed, the viscosity of the natural rubber decreases and the mastication step of the rubber and other later processing of the natural rubber can be simplified, when compared with the past.

In accordance with the second aspect of the present invention, there is provided a method for producing a natural rubber/carbon black master batch comprising mixing, into a natural rubber latex, an aqueous slurry of carbon black containing 1 to 200 parts by weight of carbon black based upon 100 parts by weight, in terms of a solid, of the rubber and 1 to 30 wt% of a surfactant, based upon the weight of the carbon black, then spraying and drying the mixture under an atmosphere of a shock wave derived from pulse combustion.

In accordance with the second aspect of the present invention, there is also provided a method for producing a natural rubber/carbon black master batch comprising mixing, into a natural rubber latex, an aqueous slurry of carbon black and a water-soluble polymer, then spraying and drying the mixture thus obtained under an atmosphere of a shock wave generated from pulse combustion.

In accordance with the second aspect of the present invention, there is further provided an apparatus for mixing and drying a solution or dispersion of at least two solid substances, of which drying apparatus is provided with pumps for feeding at least two starting liquids, a control mechanism for controlling a feed ratio of the pumps, at least two starting liquid feed lines for feeding at least two starting liquids at any ratio and a pulse combuster for spraying said two starting liquids after combining into a single feed line, and then drying the mixture under an atmosphere of a shock wave generated from pulse combustion.

According to the second aspect of the present invention, since, instead of the conventional processes of coagulation by acid, natural coagulation, pulse combustion is used to cause a slurry liquid containing a natural rubber and carbon black to instantaneously dry, a great improvement in the productivity and heat efficiency is achieved. Further, since heat degradation of the natural rubber or gelling of the natural rubber arising due to conventional drying upon heating is suppressed, the control of the quality of the master batch becomes far easier. Further, since gelling is suppressed, the viscosity of the natural rubber decreases and the mastication step of the rubber and other later processing of the rubber can be simplified compared with the past.

### BRIEF DESCRIPTION OF DRAWINGS

The present invention will now be explained in detail, while referring to the attached drawings, wherein:
FIG. 1 is an explanatory view of an example of a pulse combustion drying apparatus of the present invention;
FIG. 2 a view of an example of the structure of a spraying unit of a conventional pulse combustion drying apparatus;
FIG. 3 is a view of an example of the structure of a spraying unit of a pulse combustion drying apparatus of the present invention; and
FIG. 4 is a view of another example of the structure of a spraying unit of a pulse combustion drying apparatus of the present invention.

### BEST MODE FOR CARRYING OUT THE INVENTION

In the description and claims of this application, the singular forms "a", "an" and "the" include plural forms insofar as it is not clear from the context that the form is singular.

The inventors found that, by mixing a liquid including a natural rubber component, for example, a liquid including a natural rubber, and a filler and spraying the slurry-like, sol-like or aqueous solution liquid (that is, slurry, sol, or solution, the same below) under an atmosphere of a shock wave generated from pulse combustion to remove the solvent (i.e., water or organic solvent) and dry the liquid instantaneously, it is possible to produced a natural rubber of a master batch, in a short time and low cost, without accompanying degradation or gelling of the polymer.

Note that the method of spraying a liquid containing a natural rubber component and a slurry, sol, or solution of a filler under an atmosphere of a shock wave generated from pulse combustion is not particularly limited, but for example it is also possible to simultaneously spray a liquid containing a natural rubber and slurry, sol, or solution of a filler from separate nozzles or separately feed them and combine them by a constant ratio just before spraying, then spray the result from a single nozzle or to mix the polymer latex and slurry, sol, or solution of the filler in advance and feed and spray the mixture from a nozzle.

As the filler, for example, carbon black, silica, colloidal silica, water-glass, clay, calcium carbonate, clay, is preferably used. The viscosity of the mixture before drying processed in this way is preferably 3000 mPa·s or less, more preferably 2000 mPa·s or less, particularly preferably 1000 mPa·s or less. Due to this, it is possible to effectively prevent clogging of the feed pipes, poor drying. Note that the "viscosity" herein means the viscosity as measured by a type B viscometer.

In this way, according to the method of the present invention, the drying of the wet master batch or other natural rubber mixture containing the filler, which used to take an extremely long time, becomes instantaneous, and therefore, it becomes possible to produce the rubber/filler master batch by an industrially sufficient processing capability.

Further, by mixing a vulcanizing agent or other rubber additive(s) generally blended into an aqueous or organic solution of a rubber composition and drying the mixture by the method of the present invention, it is possible to greatly reduce the steps of blending compounding agents into the rubber which had been conventionally performed by a Banbury mixer, kneader, etc. and immediately feed the compound into the extrusion, rolling, or other step through a simple mixing step aimed at dispersion.

According to the present invention, as explained above, a filler is mixed with a natural rubber latex

This mixture was dried using a pulse combuster for generating a pulse shock wave described in, for example, JP-A-6-28681 (Kokai) to produce a natural rubber composition. In the present invention, by using such a pulse combustion apparatus to spray dry a natural rubber mixture with a solid concentration of 60 wt% or less at preferably a frequency of 50 to 1200Hz, more preferably 250 to 1000Hz, preferably at a temperature of 140°C or less, more preferably 40 to 100°C, in a drying chamber, it is possible to obtain a natural rubber composition.

As the solution including a natural rubber component which can be dried by the present invention, natural rubber latices may be mentioned.

The solid concentration of the natural rubber mixture for drying according to the present invention is not particularly limited, but 60 wt% or less is preferable, while 20 to 50 wt% is more preferable. If the solid concentration is more than 60 wt%, the viscosity of the natural rubber mixture becomes too high and simultaneously the stability of the natural rubber in a mixture decreases, and therefore, when charging the mixture into a pulse shock wave dryer, the mixture will coagulate inside the feed pipes, the mixture cannot be sprayed well into the drying chamber, or other problems are liable to arise. Further, when the solid concentration is too low, there is no problem in the drying itself, but the amount of the natural rubber mixture which can be dried per unit time is decreased and therefore there is liable to be a problem in drying efficiency.

For the method of drying a natural rubber composition including a filler according to the present invention, it is possible to mix, into the natural rubber composition, in advance, other compounding agents (for example, an antioxidant, various types of carbon blacks, various types of silicas, other fillers, oils, plasticizers, cross-linking agents, vulcanization accelerators, vulcanization accelerating aids, peptisers, coloring agents, coupling agents, preservatives, resins, or emulsifiers) or other third ingredients in an aqueous solution, aqueous dispersion, and/or hydrophilic organic solvent solution into one or both of the solution including the natural rubber and the solution containing the filler and drying the mixture to obtain a natural rubber composition containing these blended ingredients. Further, it is possible to mix, in advance, two or more types of solutions containing natural rubber ingredients at a predetermined ratio and directly obtain a blend of different types of natural rubber.

According to the second aspect of the present invention, it is possible to dry a latex including a natural rubber as a polymer ingredient and an aqueous slurry including carbon black, as a filler, using a pulse combustion apparatus generating a pulse shock wave as described in, for example, JP-B-6-28681 (Kokoku) so as to produce a natural rubber/carbon- black master batch. In the present invention, it is possible to achieve the above object by using the pulse combuster to preferably spray dry a natural rubber (NR) latex having a solid concentration of 60 wt.% or less and an aqueous slurry of carbon black (CB) having a concentration of 20 wt% or less at a ratio of NR/CB (solid weight ratio) = 100/1 to 100/200, preferably at a frequency of 50 to 1200Hz, more preferably 200 to 1000Hz, preferably at a temperature of 140°C or less, more preferably 40 to 100°C, in a dryer.

The solid concentration of the mixture of the natural rubber latex and carbon black scurry dried according to the second aspect of the present invention is preferably 60 wt% or less, more preferably 10 to 50 wt%. If this solid concentration is too high, the viscosity of the natural rubber latex will become high and simultaneously the stability will decrease, and therefore when charged into the pulse shock wave dryer, the mixture will solidify in the feed pipes, the mixture will not be sprayed well into the drying chamber, or other problems may occur. Further, if the solid concentration is too low, while there will not be any problem in the drying itself, the amount capable of being tried in unit time will be decreased, and therefore this will not be practical.

The inventors found that, by mixing a natural rubber latex and an aqueous slurry of carbon black to obtain a slurry state or sol state and spraying the mixture in an atmosphere of a shock wave generated from pulse combustion to remove the solvent (e.g., water or organic solvent) and dry the mixture instantaneously, it is possible to produce a master batch in a short time and a low cost, without degradation or gelling of the natural rubber Note that the method for spraying the natural rubber latex and aqueous slurry of carbon black in an atmosphere of a shock wave generated from pulse combustion is not particularly limited, but, for example, it is also possible to simultaneously spray the natural rubber latex and carbon black slurry from separate nozzles, to separately feed them and combine them at a certain ratio just before spraying, and then spray the mixture from a single nozzle, or mix the natural rubber latex and aqueous slurry of carbon black, in advance, and feed them together and spray them from a nozzle. The carbon black used in the present invention is not particularly limited. It is possible to use any carbon black. The viscosity of the mixture at 25°C, before drying processed in this way is preferably 3000 mPa·s or less, more preferably 2000 mPa·s or less, particularly preferably. 1000 mPa·s or less. Due to this, it is possible to effectively prevent clogging of feed pipes and poor drying.

In this way, according to the method of the second aspect of the present invention, since the drying of the wet master batch containing carbon black, which used to take an extremely long time, becomes instantaneous, it becomes possible to produce a natural rubber/carbon black master batch by an industrially sufficient processing capacity.

The mixture dried by the pulse combustion may further include, if necessary, a vulcanizing agent, a vulcanization accelerator, an antioxidant, a metal oxide, a fatty acid, a resin, an oil, or other rubber compounding agents generally added to rubber compositions. When dried by the method of the present invention, it is possible to greatly reduce the compounding step of compounding agents to the rubber which used to be performed by a Banbury mixer, kneader, etc. and possible to immediately feed compound to the later steps of extrusion and rolling.

In one mode of the second aspect of the present invention it is possible to uniformly mix, into the natural rubber latex and/or carbon black slurry, 1 to 30 wt%, preferably 3 to 20 wt% of a surfactant, based upon the weight of carbon black, in terms of solid, in advance and dry the mixture to obtain the desired master batch. By the use of the surfactant, the stability of the mixture of NR latex and carbon black, which results in gelling by just mixing, is improved and preparation of a master batch achieving uniform dispersion becomes possible. Further, by drying by pulse combustion, it is possible to dry with little molecular cleavage or heat history and possible to obtain a master batch exhibiting extremely good physical properties. It is also possible to mix and dry together other rubber compounding agents. The addition of these compounding agents at later steps can be eliminated and a great improvement of the productivity can be achieved.

The surfactant (or emulsifier) capable of being used in the present invention is not particularly limited, but a nonionic surfactant, cationic surfactant, anionic surfactant, ampholytic surfactant may be used. In particular, nonionic surfactants and cationic surfactants are preferably used. As nonionic surfactants, for example, polyoxyethylene alkyl ethers, polyoxyalkylene alkyl ethers, sugar fatty acid esters, polyoxyethylene sorbitan fatty acid esters, polyoxyethylene sorbitol fatty acid esters, polyhydric alcohol fatty acid esters, polyoxyethylene fatty acid esters, polyoxyethylene alkyl amines, alkyl alkanol amides may be mentioned. As cationic surfactants, for example, alkyl sulfate ester salts, polyoxyethylene alkyl ether sulfate ester salts, alkyl sulfonates, alkyl benzene sulfonates, alkyl naphthalene sulfonates, naphthalate sulfonates, alkyl sulfosuccinates, alkyl diphenyl ether disulfonates, fatty acid salts, polyhydric carboxylates, alkyl sulfate triethanolamine, alkenyl succinates, alkyl phosphate ester salts, polyoxyalkylene phosphate ester salts may be mentioned.

According to another second aspect of the present invention, it is possible to add a water-soluble polymer into said natural rubber latex and/or carbon black slurry, in advance, before drying by pulse combustion and then uniformly mix them and dry the same so as to obtain the desired master batch. The amount of use of the water-soluble polymer is 1 to 30 wt%, based upon the weight of the carbon black, in terms of solid, more preferably 3 to 20 wt%. Due to this addition, the stability of a mixture of NR latex and carbon black, which gels with just mixing, is improved and preparation of a master batch achieving uniform dispersion becomes possible. Further, by drying by pulse combustion, drying with little molecular cleavage or heat history becomes possible and extremely good physical properties can be exhibited.

The water-soluble polymer used in the present invention is not particularly limited so long as it is water soluble. For example, corn starch or another starch, mannan or pectin or another natural polysaccharide, agar or alginic acid or another seaweed, various types of gums, dextran or pulleran or another microorganisum-derived polysaccharide, hide glue or gelatin or another protein, carboxymethyl cellulose or hydroxyethyl cellulose or another cellulose derivative, polyacrylic acid, polyacrylamide, polyvinyl alcohol, polyethylene imine, polyethylene oxide, polyvinyl pyrrolidone, or another synthetic polymer may be used. Particularly preferable water-soluble polymers are polyvinyl alcohol (PVA) or water-soluble cellulose derivatives or their salts. Among the polyvinyl alcohols, sulfonate-modified polyvinyl alcohol is further preferable and enables a mixture more superior in emulsion stability to be obtained. Further, among water-soluble cellulose derivatives, carboxymethyl cellulose (CMC) and its salts are particularly preferable. In particular, use of ones having an etherification degree of 0.5 to 1.6, more preferably 0.6 to 1.5, are more preferred. This is because in particular carboxymethyl cellulose (CMC) is more superior in emulsion stability compared with ordinary emulsifiers and enables a stable mixture, and further cellulose derivatives are very small in impact on the environment and high in safety.

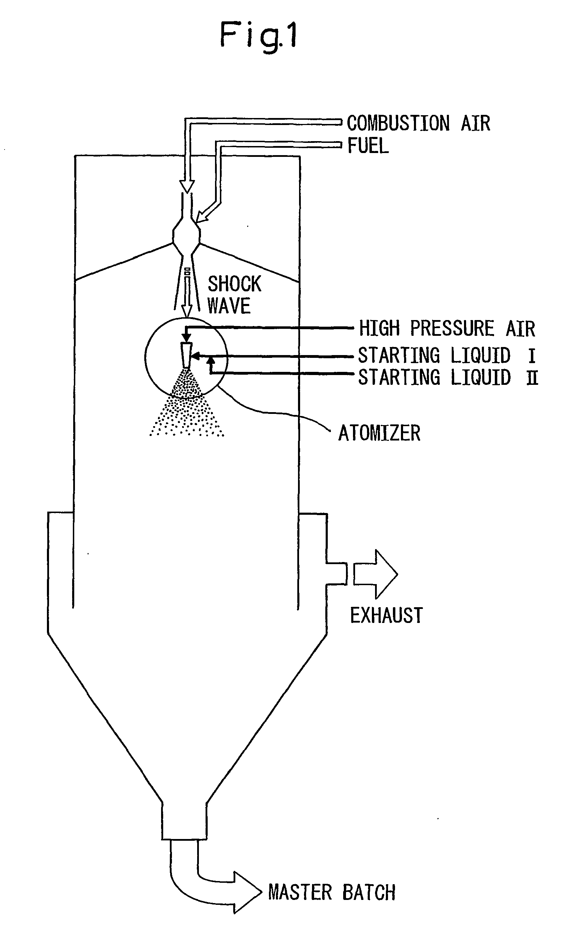

According to a further second aspect of the present invention, by using an apparatus for mixing and drying a solution or dispersion of at least two types of solid substances as shown in, for example, FIG. 1 provided with pumps for feeding at least two types of stock solutions, a control mechanism for controlling a feed ratio of the pumps, at least two stock solution feed paths for feeding at least two types of stock solutions at any ratio, and a pulse combuster for making said two stock solution feed paths converge to a single path, then spraying and drying the mixture in an atmosphere of a shock wave obtained by pulse combustion so as to introduce a natural rubber latex and carbon black slurry and, in some cases, dispersions of one or both of these to which a surfactant or water-soluble polymer is added from separate stock feed paths so as to dry the mixture by pulse combustion, the result becomes batch processing suitable for mass production like with the method of mixing, then drying the latex and carbon black slurry, but is not suitable for short run diverse production, while by separately and individually feeding the stocks and controlling the feed ratio, it is possible to freely set and dry a master batch or composition of any mixing ratio.

In particular, the method of the present invention is extremely effective for preparing a master batch of a mixture of an NR latex and carbon black which results in gelling several seconds to tens of seconds after mixing. By drying by pulse combustion, drying with little molecular cleavage or heat history is possible. Note that a surfactant, PVA, or a water-soluble cellulose derivative or other emulsifier may also be added to either, depending upon the need.

According to the second aspect of the present invention, when mixing and drying a natural rubber latex and aqueous slurry of carbon black to produce a master batch, it is possible to separately supply a natural rubber latex and carbon black slurry from at least two starting material feed lines, combine them into a single line, then spray and dry the mixture in an atmosphere of a shock wave generated from pulse combustion to produce a master batch. The time after combining the starting material feed lines to a single line to when spraying the mixture into the atmosphere of a shock wave generated from pulse combustion is preferably 0.1 to 10 seconds, more preferably 1 to 5 seconds. If the time is too long, the mixture is liable to coagulate inside the nozzle before being sprayed, and therefore this is not preferred.

The viscosity at 25°C of the mixture of the starting latex and carbon black slurry (measured by a type B viscometer) is preferably 3000 mP·s or less, more preferably 2000 mPa·s or less, particularly preferably 1000 mPa·s or less.

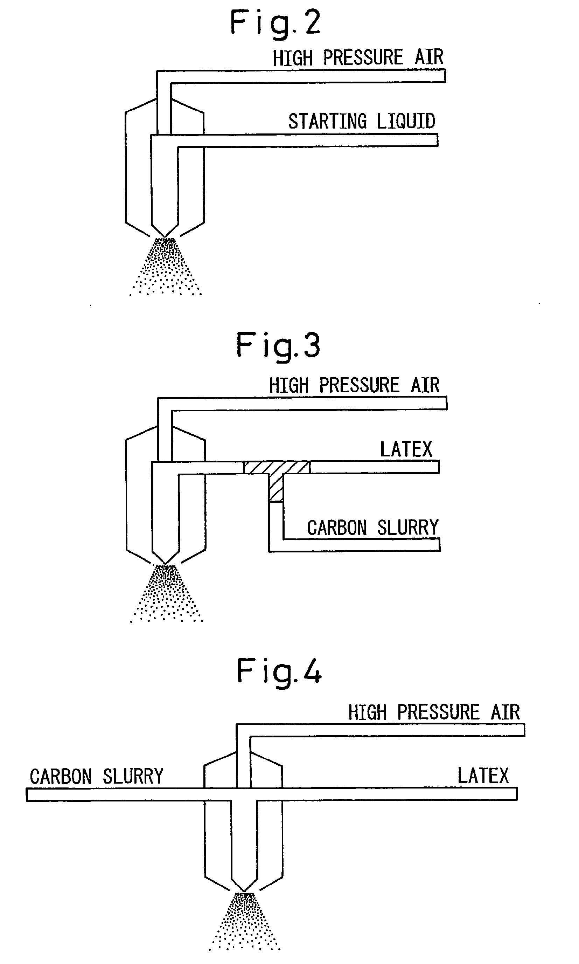

Further, the frequency of the pulse combustion is preferably 50 to 1200Hz, whereas the temperature of the drying chamber for spraying the latex is preferably 140°C or less, more preferably 40 to 100°C. According to the present invention, as shown in FIG. 1, a desirable effect is obtained by providing a control mechanism for automatically controlling the feed ratio of the pump feeding the starting liquids I and II, providing at least two starting material feed lines for feeding at least two types of starting material' at any ratio, combining them to a single line, then spraying and drying the mixture in an atmosphere of a shock wave generated from pulse combustion. FIG. 2 shows the structure of a conventional sprayer, while FIG. 3 and FIG. 4 show the structures of preferable aspects of sprayers according to the present invention.

### EXAMPLES

The present invention will now be explained in further detail by Examples.

### Example 1 and Comparative Example 1

As Comparative Example 1, the method for producing a rubber composition from a mixture of 2 kg of natural rubber latex (made in Thailand, 30 wt% dry rubber content) and 1 kg of colloidal silica (made by Nissan Chemical Industries, Snowtex 30) by a conventional vacuum drying method is shown. The natural rubber latex is tapped, then foreign matter removed and colloidal silica mixed with the result and mixture. This mixture was coagulated by adding formic acid, followed by vacuum drying with agitation at 80°C to remove the moisture. The resultant mixture is then roll mixed to obtain the desired rubber composition. The time required was 10 hours and 15 minutes as shown in Table I.

On the other hand, in Example 1, 2 kg of the same natural rubber latex as in Comparative Example 1 stabilized by addition of ammonia was filtered for impurities, then mixed with 1 kg of colloidal silica. The mixture was sprayed and dried using a pulse shock wave dryer (Hypulcon made by Pultech) under conditions of a frequency of 1000Hz and a temperature of 60°C. The drying times of the latices of Example 1 and Comparative Example 1 were compared in Table I below. As is clear from the results of Table I, in Example 1 according to the present invention, the drying time for processing about 3 liters of latex was shortened to about 1.5 hours. Note that the drying time was the processing capacity of the pulse shock wave dryer. The time required for the moisture to be actually removed was not more than 1 second. Due to the size of the dryer, the amount of the latex capable of being dried per unit time is determined. The processing capability of the dryer used in Example 1 according to the present invention was about 2 kg/hour.

**Table I: NR Latex/Colloidal Silica**

| Comp. Ex. 1 (Prior Art) | | Ex. 1 | |
|---|---|---|---|
| Step | Required | Step | Required |
| | time | | time |
| Charging of NR | | Charging of NR | |
| latex/colloidal silica | | latex/colloidal silica | |
| Agitation | 5 min | Agitation | 5 min |
| Vacuum drying (80°C) | 10 hr | Drying by pulse combustion | 1.5 hr |
| Roll mixing | 10 min | Roll mixing | 10 min |

| | | | |
|---|---|---|---|
| (Note) The NR latex and colloidal silica were first mixed with stirring. The remaining compounding agents (zinc oxide, stearic acid, sulfur, and vulcanization accelerator) were mixed by a roll. | | | |

### Example 2 and Comparative Example 2

The rubber physical properties of the natural rubber and silica master batch obtained in Example 1 and Comparative Example 1 were compared. That is, in the formulation shown in Table II, the ingredients other than the vulcanization accelerator and sulfur were compounded in a 1.7 liter Banbury mixer for 5 minutes. When reaching 140°C, the resultant mixture was discharged to obtain a master batch. The vulcanization accelerator and sulfur were compounded into the master batch by an 8-inch open roll (temperature adjusted to 40°C) to obtain a rubber composition. The unvulcanized rubber composition obtained was vulcanized in a 15 x 15 x 0.2 cm mould at 150°C for 30 minutes to obtain a vulcanized rubber sheet which was then measured for rubber physical properties by the test method shown below. The results are shown in Table II.
300% modulus (MPa): Measured according to JIS K-6251 (JIS No. 3 dumbbell)
Tensile strength at break: Measured according to JIS K-6251 (JIS No. 3 dumbbell)
Elongation at break: Measured according to JIS K-6251 (JIS No. 3 dumbbell)
tan δ (60°C): Measured using a Rheograph Solid made by Toyoseiki at an initial elongation of 10%, a dynamic strain of 2% and a frequency of 20Hz (sample width 5 mm).

As is clear from the results shown in Table II, in Example 2 according to the present invention, due to the instantaneous drying of the latex, the dispersion of the silica was improved and the tensile properties and viscoelastic properties were improved.

**Table II: Physical Properties of Compound of Silica Master Batch**

| Name of material (Tradename) | Comp. 2 | Ex. 2 |
|---|---|---|
| Formulation (parts by weight) | | |
| Comp. Ex. 1 master batch | 150 | - |
| Ex. 1 master batch | - | 150 |
| (of which, amount of silica) | (50) | (50) |
| Zinc oxide, made by Seido Chemical Industry (Zinc White #3) | 3 | 3 |
| Stearic acid, made by NOF (Beads Stearic Acid) | 2 | 2 |
| Sulfur, made by Tsurumi Chemical ("Kinka" brand fine powder sulfur 150 mesh) | 1.5 | 1.5 |
| Vulcanization accelerator, made by Ouchi Shinko Chemical (Noccelar NS-F) | 1 | 1 |

| Material physical properties (room temperature) | | |
|---|---|---|
| 300% modulus (MPa) | 9.2 | 8.8 |
| Tensile strength at break (MPa) | 21.7 | 26.4 |
| Elongation at break (%) | 520 | 600 |
| tan δ (60°C) | 0.09 | 0.07 |

### Example 3 and Comparative Example 3

Except for replacing the colloidal silica with 300 g of clay (Kunipia F made by Kunimine Industry) (dispersed in 1800 kg of water) for 2 kg of NR latex, the same procedure was followed as in Comparative Example 1 and Example 1 to obtain a rubber composition. The required time was shortened to 2 hours as shown in Table II.

**Table III: NR Latex/Clay**

| Comp. Ex. 3 (Prior Art) | | Ex. 3 | |
|---|---|---|---|
| | | | |

| Step | Required | Step | Required |
|---|---|---|---|
| | time | | time |
| Charging of clay/water | | Charging of clay/water | |
| mixture | | mixture | |
| Mixing of aqueous | | Mixing of aqueous | |
| slurry/NR latex | | slurry/NR latex | |
| Agitation | 5 min | Agitation | 5 min |
| Vacuum drying (80°C) | 10 hr | Drying by pulse combustion | 2 hr |
| Roll mixing | 10 min | Roll mixing | 10 min |

| | | | |
|---|---|---|---|
| (Note) The NR latex and clay were first mixed with stirring. The remaining compounding agents (zinc oxide, stearic acid, sulfur, and vulcanization accelerator) were mixed by a roll. | | | |

### Example 4 and Comparative Example 4

The rubber physical properties of the natural rubber and clay master batch obtained in Example 3 and Comparative Example 3 were compared in the same way as in Example 2 and Comparative Example 2 in the formulations shown in Table IV. That is, the ingredients other than the vulcanization accelerator and sulfur were compounded in a 1.7 liter internal mixer for 5 minutes. When reaching 140°C, the resultant mixture was discharged to obtain a master batch. The vulcanization accelerator and sulfur were compounded in this master batch by an 8-inch open roll to obtain a rubber composition.

Next, the rubber composition obtained was vulcanized in a 15 x 15 x 0.2 cm mould at 150°C for 30 minutes to prepare a vulcanized rubber sheet which was then measured for 300% modulus, tensile strength at break and elongation at break by the above test methods. Further, the permeability was measured by the following method. The results are shown in Table IV. As is clear from the results of Table IV, according to the method of the present invention, the dispersion of the clay was improved and the tensile properties and permeability were improved compared with the conventional method.

Permeability: The rubber compositions obtained in Example 3 and Comparative Example 3 were vulcanized to diameters of 10 cm and thicknesses of 0.5 mm and measured for permeability of air at 60°C using a gas permeability measurement apparatus MT-C3 made by Toyoseiki. The values were shown by indexes against the value of the rubber of Comparative Example 3 as 100. The smaller the value, the better (the more difficult the passage of air).

**Table IV. Physical Properties of Compound of Silica Master Batch**

| Name of material (Tradename) | Comp. 4 | Ex. 4 |
|---|---|---|
| Formulation (parts by weight) | | |
| Comp. Ex. 2 master batch | 150 | - |
| Ex. 2 master batch | - | 150 |
| (of which, amount of clay) Kunipia F (Kunimine | (50) | (50) |
| Industries) | | |
| Zinc oxide, made by Seido Chemical Industry (Zinc | 3 | 3 |
| White #3) | | |
| Stearic acid, made by NOF (Beads Stearic Acid) | 2 | 2 |
| Sulfur, made by Tsurumi Chemical ("Kinka" brand | 1.5 | 1.5 |
| fine powder sulfur 150 mesh) | | |
| Vulcanization accelerator, made by Ouchi Shinko | 1 | 1 |
| Chemical (Noccelar NS-F) | | |

| Material physical properties (room temperature) | | |
|---|---|---|
| 300% modulus (MPa) | 13.7 | 13.4 |
| Tensile strength at break (MPa) | 19.4 | 21.3 |
| Elongation at break (%) | 420 | 470 |
| tan δ (60°C) (index) | 100 | 96 |

Permeability: Index against the value of Comparative Example 4 as 100. The smaller the value, the lower the air permeability shown.

### Examples 5 to 8 and Comparative Example 5

Samples were dried by pulse combustion and stabilization tests conducted according to the formulations shown in Table V. The drying by pulse combustion was conducted using a Hypulcon made by Pultech at a frequency of 1000Hz and a temperature of 60°C, while adding and mixing a surfactant to the carbon black slurry. The results are shown in Table V. Note that in Comparative Example 5, the sample results in gelling immediately after mixing the natural rubber latex and carbon black slurry making the drying test impossible.

**Table V**

| | Comp. Ex. 5 | Ex. 5 | Ex. 6 | Ex. 7 | Ex. 8 |
|---|---|---|---|---|---|
| Formulation (parts by weight) | | | | | |
| NR latex (rubber ingredient 60 wt%) (Hytex HA, Golden Hope | 166.67 | 166.67 | 166.67 | 166.67 | 166.67 |
| Plantations) | | | | | |
| Carbon black (Shoblack N339, Showa Cabot) | 50 | 50 | 50 | 50 | 50 |
| Water | 500 | 500 | 500 | 500 | 500 |
| Cationic surfactant (Taycapower LN2450, Taica) | - | 5 | - | - | - |
| Nonionic surfactant (Emulgen 1108, Kao) | - | - | 5 | - | - |
| PVA (Gohsenol GM-14, Nippon Synthetic Chemical Industry) | - | - | - | 5 | - |
| Sulfonate-modified PVA (Gohsenol L-3266, made by Nippon Synthetic) | - | - | - | - | 5 |
| Chemical Industry | | | | | |

| Evaluated physical properties | | | | | |
|---|---|---|---|---|---|
| Stabilization test | | | | | |
| Right after preparation | Gelling | ++ | ++ | ++ | ++ |
| After 24 hours | - | + | + | ++ | ++ |
| Drying by pulse combustion | Not OK | OK | OK | OK | OK |

Stabilization test: The state right after preparation of master batch and the state after standing for 24 hours at room temperature observed and evaluated under the following criteria:
++... Uniform liquid state held and no increase in viscosity or gel observed
+... Some increase in viscosity, but liquid state held.

### Examples 9 to 12 and Comparative Example 6

Next, the carbon master batches of Examples 5 to 8 obtained above were used for evaluation of the rubber physical properties by the formulations shown in Table VI. That is, in each of the formulations shown in Table VI, the components other than the vulcanization accelerator and sulfur were compounded in a 1.7 liter Banbury mixer for 3 minutes (mixing for 5 minutes in Comparative Example 6) to obtain a master batch. The vulcanization accelerator and sulfur were compounded into the master batch by an 8-inch open roll to obtain a rubber composition. The unvulcanized rubber composition obtained above was vulcanized in a 15 x 15 x 0.2 cm mould at 150°C for 30 minutes to obtain a vulcanized rubber sheet which was then measured for rubber physical properties by the test methods shown below. The results are shown in Table VI. Further, the weight average molecular weight was measured. The results are shown in Table VI.
300% modulus (MPa): Measured according to JIS K-6251 (JIS No. 3 dumbbell)
Tensile strength at break: Measured according to JIS K-6251 (JIS No. 3 dumbbell)
Elongation at break: Measured according to JIS K-6251 (JIS No. 3 dumbbell)

Weight average molecular weight (GPC method): The weight average molecular weights (Mw) of the solvent solubles of the carbon black master batches of the Examples and Comparative Examples were measured using GPC (Gel Permeation Chromatography).

**Table VI**

| | Ex. 9 | Ex. 10 | Ex. 11 | Ex. 12 | Comp. Ex. 6 |
|---|---|---|---|---|---|
| Formulation (parts by weight) | | | | | |
| NR master batch of Example 5 | 155 | - | - | - | - |
| NR master batch of Example 6 | - | 155 | - | - | - |
| NR master batch of Example 7 | - | - | 155 | - | - |
| NR master batch of Example 8 | - | - | - | 155 | - |
| NR (STR20) | - | - | - | - | 100 |
| HAF grade carbon (Shoblack N339, Showa Cabot) | - | - | - | - | 50 |
| Zinc oxide (Zinc White #3, Seido Chemical Industry) | 5 | 5 | 5 | 5 | 5 |
| Stearic acid (Beads Stearic Acid, NOF) | 3 | 3 | 3 | | 3 |
| Antioxidant (Nocrack 6C, Ouchi Shinko Chemical Industrial) | 1 | 1 | 1 | 1 | 1 |
| Sulfur ("Kinka" brand fine powder sulfur (150 mesh), Tsurumi | 1.5 | 1.5 | 1.5 | 1.5 | 1.5 |
| Chemical) | | | | | |
| Vulcanization accelerator (Noccelar NS-F, Ouchi Shinko Chemical | | | 1 | | 1 |
| Industrial) | | | | | |

| Evaluated physical properties | | | | | |
|---|---|---|---|---|---|
| 300% modulus (MPa) | 13.4 | 13.6 | 14.3 | 14.7 | 16.0 |
| Tensile strength at break (MPa) | 26.2 | 22.2 | 21.0 | 26.7 | 19.0 |
| Elongation at break (%) | 500 | 450 | 420 | 480 | 340 |
| GPC method weight average molecular weight (Mw) x 10⁵ | 4.92 | 4.70 | 4.77 | 4.63 | 3.21 |

### Examples 13 to 16 and Comparative Example 7

Water-soluble cellulose derivatives were added and mixed with carbon black slurry according to the formulations shown in Table VII using Hypulcon made by Pultech at a frequency of 1000Hz and a temperature of 60°C to prepare master batches. Stabilization tests of the master batches obtained were conducted under the following criteria. The results are shown in Table VII. Note that in Comparative Example 7, right after the natural rubber latex and carbon black slurry were mixed, the sample results in gelling, and therefore the drying test could not be conducted.

Stabilization test: The state right after preparation of prepared master batch and the state after standing for 24 hours at room temperature observed and evaluated under the following criteria:
++... Uniform liquid state held and no increase in viscosity or gel observed
+... Some increase in viscosity, but liquid state held.
±··· Considerable increase in viscosity with fine gel observed, but sprayable

**Table VII**

| | Comp. Ex. 7 | Ex. 13 | Ex. 14 | Ex. 15 | Ex. 16 |
|---|---|---|---|---|---|
| Formulation (parts by weight) | | | | | |
| NR latex (rubber ingredient 60 wt%) (Hytex HA, Golden Hope Plantations) | 166.67 | 166.67 | 166.67 | 166.67 | 166.67 |
| Carbon black (Shoblack N339, Showa Cabot) | 50 | 50 | 50 | 50 | 50 |
| Water | 1000 | 1000 | 1000 | 1000 | 1000 |
| Carboxymethyl cellulose, CMC Daicel 1105 (Daicel Chemical Industries)^{*1} | - | 5 | - | - | - |
| Carboxymethyl cellulose, CMC Daicel 1310 (Daicel Chemical Industries) ^{*2} | - | - | 5 | - | - |
| Carboxymethyl cellulose, Anestogam 9450 (Daicel Chemical Industries) ^{*3} | - | - | - | 5 | - |
| Hydroxyethyl cellulose, HEC Daicel SP200 (Daicel Chemical Industries) ^{*4} | - | - | - | - | 5 |

| Evaluated physical properties | | | | | |
|---|---|---|---|---|---|
| Stabilization test | | | | | |
| Right after preparation | Gelling | ++ | ++ | + | + |
| After 48 hours | - | + | + | ± | ± |
| Drying by pulse combustion | Not OK | OK | OK | OK | OK |

| | | | | | |
|---|---|---|---|---|---|
| *1: Etherification degree 0.6 *2: Etherification degree 1.2 *3: Etherification degree 1.7 *4: Etherification degree 0.5 | | | | | |

### Examples 17 to 20 and Comparative Example 8

Next, the rubber physical properties were evaluated in the formulations shown in Table VIII using the carbon master batches of Examples 17 to 20 obtained above. That is, in each of the formulations shown in Table VIII, the ingredients other than the vulcanization accelerator and sulfur were compounded by a 1.7 liter Banbury mixer for 3 minutes (mixing for 5 minutes for Comparative Example 8) to obtain a master batch. The vulcanization accelerator and sulfur were compounded into the master batch by an 8-inch open roll to obtain a rubber composition. The obtained unvulcanized rubber composition was vulcanized in a 15 x 15 x 0.2 cm mould at 150°C for 30 minutes to obtain a vulcanized rubber sheet which was then measured for rubber physical properties by the test methods shown below. The results are shown in Table VIII.
300% modulus (MPa): Measured according to JIS K-6251 (JIS No. 3 dumbbell)
Tensile strength at break: Measured according to JIS K-6251 (JIS No. 3 dumbbell)
Elongation at break: Measured according to JIS K-6251 (JIS No. 3 dumbbell)

**Table VIII**

| | Ex. 17 | Ex. 18 | Ex. 19 | Ex. 20 | Comp. Ex. 8 |
|---|---|---|---|---|---|
| Formulation (parts by weight) | | | | | |
| NR master batch of Example 13 | 155 | - | - | - | - |
| NR master batch of Example 14 | - | 155 | - | - | - |
| NR master batch of Example 15 | - | - | 155 | - | - |
| NR master batch of Example 16 | - | - | - | 155 | - |
| NR (STR20) | - | - | - | - | 100 |
| HAF grade carbon (Shoblack N339, Showa Cabot) | - | - | - | - | 50 |
| Zinc oxide (Zinc White #3, Seido Chemical Industry) | 5 | 5 | 5 | 5 | 5 |
| Stearic acid (Beads Stearic Acid, NOF) | 3 | 3 | 3 | 3 | 3 |
| Antioxidant (Nocrack 6C, Ouchi Shinko Chemical Industrial) | 1 | 1 | 1 | 1 | 1 |
| Sulfur ("Kinka" brand fine sulfur (150 mesh), Tsurumi Chemical) | 1.5 | 1.5 | 1.5 | 1.5 | 1.5 |
| Vulcanization accelerator (Noccelar NS-F, Ouchi Shinko Chemical | 1 | | 1 | | 1 |
| Industrial) | | | | | |

| Evaluated physical properties | | | | | |
|---|---|---|---|---|---|
| 300% modulus (MPa) | 15.1 | 15.8 | 14.8 | 14.5 | 16.0 |
| Tensile strength at break (MPa) | 26.0 | 26.4 | 23.0 | 22.5 | 19.0 |
| Elongation at break (%) | 490 | 510 | 460 | 440 | 350 |

### INDUSTRIAL APPLICABILITY

As explained above, according to the method for producing a natural rubber composition according to the present invention, it is possible to greatly simplify the production of a natural rubber composition from a latex containing a natural rubber, which used to require a long time. Further, the mixing time and energy of the rubber by a Banbury mixer can be reduced. This is useful as a new method of mixing rubber. According to the method for producing a master batch from a natural rubber latex and carbon black slurry according to the present invention, since the mixture is sprayed under an atmosphere of a shock wave generated from pulse combustion and the solvent is removed to instantaneously dry the natural rubber latex and carbon black slurry, the work efficiency and heat efficiency of production of a natural rubber/carbon black master batch can be improved, there is little liability of heat degradation or gelling as in the past in the quality of the master batch obtained as well, the production of a master batch can be greatly simplified and the mixing time and the energy of rubber by a Banbury mixer can be reduced, and therefore the method is useful as a new method for producing a master batch.

## Claims

1. A method for producing a natural rubber composition containing a filler comprising simultaneously spraying and drying a liquid containing a natural rubber component and a liquid containing a filler under an atmosphere of a shock wave generated from pulse combustion.

2. A method for producing a natural rubber composition as claimed in claim 1, further comprising mixing the filler or filler-containing liquid with the liquid containing said natural rubber component, before spraying, and then spraying it under an atmosphere of a shock wave generated from pulse combustion.

3. A method for producing a natural rubber composition as claimed in claim 1 or 2, wherein the filler is at least one filler selected from the group consisting of carbon black, silica, water-glass, colloidal silica, clay and calcium carbonate.

4. A method for producing a natural rubber composition as claimed in any one of the claims 1 to 3, wherein the natural rubber composition mixture before drying has a viscosity at 25°C of 3000 mPa · s or less.

5. A method for producing a natural rubber composition as claimed in any one of claims 1 to 5, wherein a frequency of the pulse combustion is 50 to 1200 Hz and a temperature of a drying chamber of the atmosphere of the shock wave generated from pulse combustion for spraying the liquid containing a natural rubber composition is 140°C or less.

6. A natural rubber composition produced by the method according to any one of claims 1 to 5.

7. A method for producing a natural rubber/carbon black master batch comprising mixing, into a natural rubber latex, an aqueous slurry of carbon black containing 1 to 200 parts by weight of carbon black, based upon 100 parts by weight, in terms of a solid, of the rubber and 1 to 30 wt% of a surfactant based upon the weight of the carbon black (solid content), then spraying and drying the mixture thus obtained under an atmosphere of a shock wave generated from pulse combustion.

8. A method for producing a master batch as claimed in claim 7, wherein the surfactant is mixed, in advance with at least one of natural rubber latex and aqueous slurry of carbon black, followed by agitating and mixing the natural rubber latex and the carbon black slurry.

9. A method for producing a master batch as claimed in claim 7 or 8, wherein the surfactant is a nonionic surfactant or cationic surfactant.

10. A method as claimed in claim 9, wherein a viscosity at 25°C of the mixture before drying is 3000 mPa·s or less.

11. A method for producing a master batch as claimed in any one of claims 7 to 10, wherein a frequency of the pulse combustion is 50 to 1200 Hz and a temperature of a drying chamber under the atmosphere of the shock wave generated from pulse combustion for spraying the latex is 140°C or less.

12. A method for producing a master batch as claimed in any one of claims 7 to 11, wherein the mixture further contains at least one compounding agent selected from the group consisting of vulcanizing agents, vulcanization accelerators, antioxidants, metal oxides, fatty acids, resins and oils.

13. A master batch produced by a method according to any one of claims 7 to 12.

14. A method for producing a natural rubber/carbon black master batch comprising mixing, into a natural rubber latex, an aqueous slurry of carbon black and a water-soluble polymer, then spraying and drying the mixture thus obtained under an atmosphere of a shock wave generated from.pulse combustion.

15. A method for producing a master batch as claimed in claim 14, further comprising mixing, into at least one natural rubber latex and the aqueous slurry of carbon black, the water-soluble polymer, and then agitating and mixing the latex and carbon black slurry.

16. A method for producing a master batch as claimed in claim 14 or wherein the water-soluble polymer is polyvinyl alcohol (PVA), a water-soluble cellulose derivative or a salt thereof.

17. A method for producing a master batch as claimed in claim 16, wherein an etherification degree of the water-soluble cellulose derivative is 0.5 to 1.6.

18. A method for producing a master batch as claimed in claim 16 or 17, wherein a viscosity at 25°C of the mixture is 3000 mP·s or less.

19. A method for producing a master batch as claimed in any one of claims 14 to 18, wherein a frequency of the pulse combustion is 50 to 1200 Hz and a temperature of a drying chamber for spraying the latex is 140°C or less.

20. A method for producing.a master batch as claimed in any one of claims 14 to 19, wherein the mixture further contain at least one compounding agent selected from the group consisting of vulcanizing agents, vulcanization accelerators, antioxidants, metal oxides, fatty acids, resins and oils.

21. A master batch produced by a method according to any one of claims 14 to 20.

22. A method for producing a natural rubber/carbon black master batch by mixing a natural rubber latex and an aqueous slurry of carbon black, followed by drying, comprising separately feeding the natural rubber latex and the carbon black slurry from at least two starting material feed lines, which is combined into a single line, and then spraying and drying the mixture under an atmosphere of a shock wave generated from pulse combustion.

23. A method for producing a matter batch as claimed in claim 22, wherein a time after combining the starting material feed lines to a single line, then spraying the mixture under an atmosphere of a shock wave generated from pulse combustion is 0.1 to 10 seconds.

24. A method for producing a master batch as claimed in claim 22 or 23, wherein viscosities at 25°C of the natural rubber latex and the aqueous slurry of carbon black are 3000 mP·s or less, respectively.

25. A method for producing a master batch as claimed in any one of claims 22 to 24, wherein a frequency of the pulse combustion is 50 to 1200 Hz and a temperature of a drying chamber for spraying the latex is 140°C or less.

26. A master batch produced by a method according to any one of claims 22 to 25.

27. An apparatus for mixing and drying at least two starting liquid or dispersion of solid substances, comprising pumps for feeding at least two starting liquids, a control mechanism for controlling a feed ratio of the pumps, at least two starting liquid feed lines for feeding at least two starting liquids at any ratio, and a pulse combustion apparatus for spraying, after combining the at least two starting liquid feed lines into the single feed line, the combined liquids and drying the mixture under an atmosphere of a shock wave generated from pulse combustion.

28. A drying apparatus as claimed in claim 27, wherein said at least two starting liquids are a natural rubber latex and an aqueous slurry of carbon black.

## Patentansprüche

1. Verfahren zur Erzeugung einer natürlichen Kautschukzusammensetzung, umfassend einen Füllstoff, umfassend das gleichzeitige Sprühen und Trocknen einer Flüssigkeit, umfassend eine natürliche Kautschukkomponente und eine Flüssigkeit, die einen Füllstoff enthält, unter einer Atmosphäre einer Schockwelle, die durch eine Pulsverbrennung erzeugt ist.

2. Verfahren zur Erzeugung einer natürlichen Kautschukzusammensetzung gemäß Anspruch 1, weiterhin umfassend das Mischen des Füllstoffes oder der füllstoffhaltigen Flüssigkeit mit der Flüssigkeit, die die natürliche Kautschukkomponente umfasst, vor dem Sprühen und anschließendes Sprühen unter einer Atmosphäre einer Schockwelle, die von einer Pulsverbrennung erzeugt ist.

3. Verfahren zur Erzeugung einer natürlichen Kautschukzusammensetzung nach Anspruch 1 oder 2, worin der Füllstoff zumindest ein Füllstoff ist, ausgewählt aus der Gruppe bestehend aus Ruß, Silika, Wasserglas, kolloidalem Silika, Lehm und Calciumcarbonat.

4. Verfahren zur Erzeugung einer natürlichen Kautschukzusammensetzung nach einem der Ansprüche 1 bis 3, worin die Mischung aus der natürlichen Kautschukzusammensetzung vor dem Trocknen eine Viskosität bei 25°C von 3000 mPa·s oder weniger hat.

5. Verfahren zur Erzeugung einer natürlichen Kautschukzusammensetzung nach einem der Ansprüche 1 bis 5, worin eine Frequenz der Pulsverbrennung 50 bis 1200 Hz und eine Temperatur einer Trocknungskammer der Atmosphäre der Schockwelle, die von der Pulsverbrennung erzeugt ist, zum Sprühen der Flüssigkeit, umfassend eine natürliche Kautschukzusammensetzung, 140°C oder weniger ist.

6. Natürliche Kautschukzusammensetzung, erzeugt durch das Verfahren nach einem der Ansprüche 1 bis 5.

7. Verfahren zur Erzeugung einer Vormischung aus natürlichem Kautschuk/Ruß, umfassend das Mischen einer wässrigen Aufschlämmung aus Ruß, umfassend 1 bis 200 Gew.-Teile Ruß, bezogen auf 100 Gew.-Teile, ausgedrückt als Feststoff des Kautschuks, und 1 bis 30 Gew.% eines Tensides, bezogen auf das Gewicht des Rußes (Feststoffgehalt), in einen natürlichen Kautschuklatex, anschließendes Sprühen und Trocknen der somit erhaltenen Mischung unter einer Atmosphäre einer Schockwelle, erzeugt von einer Pulsverbrennung.

8. Verfahren zur Erzeugung einer Vormischung nach Anspruch 7, worin das Tensid vorher mit zumindest einem von einem natürlichen Kautschuklatex und einer wässrigen Aufschlämmung von Ruß gemischt wird, mit anschließendem Rühren und Mischen des natürlichen Kautschuklatexes und der Rußaufschlämmung.

9. Verfahren zur Erzeugung einer Vormischung nach Anspruch 7 oder 8, worin das Tensid ein nichtionisches oder kationisches Tensid ist.

10. Verfahren nach Anspruch 9, worin eine Viskosität der Mischung vor dem Trocknen bei 25°C 3000 mPa·s oder weniger ist.

11. Verfahren zur Erzeugung einer Vormischung nach einem der Ansprüche 7 bis 10, worin eine Frequenz der Pulsverbrennung 50 bis 1200 Hz und eine Temperatur einer Trocknungskammer unter der Atmosphäre der Schockwelle, erzeugt von der Pulsverbrennung, zum Sprühen des Latex 140°C oder weniger ist.

12. Verfahren zur Erzeugung einer Vormischung nach einem der Ansprüche 7 bis 11, worin die Mischung weiterhin zumindest ein Vermischungsmittel enthält, ausgewählt aus der Gruppe, bestehend aus Vulkanisationsmitteln, Vulkanisationsbeschleunigern, Antioxidanzien, Metalloxiden, Fettsäuren, Harzen und Ölen.

13. Vormischung, erzeugt durch ein Verfahren nach einem der Ansprüche 7 bis 12.

14. Verfahren zur Erzeugung einer Vormischung aus natürlichem Kautschuk/Ruß, umfassend das Mischen einer wässrigen Aufschlämmung aus Ruß und eines wasserlöslichen Polymers in einen natürlichen Kautschuklatex, anschließendes Sprühen und Trocknen der somit erhaltenen Mischung unter einer Atmosphäre einer Schockwelle, die von einer Pulsverbrennung erzeugt ist.

15. Verfahren zur Erzeugung einer Vormischung nach Anspruch 14, weiterhin umfassend das Mischen des wasserlöslichen Polymers in zumindest einen natürlichen Kautschuklatex und die wässrige Aufschlämmung von Ruß und anschließendes Rühren und Mischen des Latexes und der Rußaufschlämmung.

16. Verfahren zur Erzeugung einer Vormischung nach Anspruch 14 oder 15, worin das wasserlösliche Polymer Polyvinylalkohol (PVA), ein wasserlösliches Cellulosederivat oder ein Salz davon ist.

17. Verfahren zur Erzeugung einer Vormischung nach Anspruch 16, worin ein Veretherungsgrad des wasserlöslichen Cellulosederivates 0,5 bis 1,6 ist.

18. Verfahren zur Erzeugung einer Vormischung nach Anspruch 16 oder 17, worin eine Viskosität der Mischung bei 25°C 3000 mPa·s oder weniger ist.

19. Verfahren zur Erzeugung einer Vormischung nach einem der Ansprüche 14 bis 18, worin eine Frequenz der Pulsverbrennung 50 bis 1200 Hz und eine Temperatur einer Trocknungskammer zum Sprühen des Latexes 140°C oder weniger ist.

20. Verfahren zur Erzeugung einer Vormischung nach einem der Ansprüche 14 bis 19, worin die Mischung weiterhin zumindest ein Vermischungsmittel enthält, ausgewählt aus der Gruppe bestehend aus Vulkanisierungsmitteln, Vulkanisationsbeschleunigern, Antioxidanzien, Metalloxiden, Fettsäuren, Harzen und Ölen.

21. Vormischung, erzeugt durch das Verfahren gemäß einem der Ansprüche 14 bis 20.

22. Verfahren zur Erzeugung einer Vormischung aus natürlichem Kautschuk/Ruß durch Mischen eines natürlichen Kautschuklatexes und einer wässrigen Aufschlämmung aus Ruß, mit anschließendem Trocknen, umfassend das getrennte Führen des natürlichen Kautschuklatexes und der Rußaufschlämmung von zumindest zwei Zuführleitungen für die Ausgangsmaterialien, die zu einer einzelnen Leitung kombiniert werden, und das anschließende Sprühen und Trocknen der Mischung unter einer Atmosphäre einer Schockwelle, die von einer Pulsverbrennung erzeugt ist.

23. Verfahren zur Erzeugung einer Vormischung nach Anspruch 22, worin eine Zeit nach dem Kombinieren der Zuführleitungen für die Ausgangsmaterialien zu einer einzelnen Leitung, das anschließende Sprühen der Mischung unter einer Atmosphäre einer Schockwelle, die von einer Pulsverbrennung erzeugt ist, 0,1 bis 10 Sekunden ist.

24. Verfahren zur Erzeugung einer Vormischung nach Anspruch 22 oder 23, worin die Viskositäten des natürlichen Kautschuklatexes und der wässrigen Aufschlämmung von Ruß 3000 mPa·s oder weniger bei 25°C sind.

25. Verfahren zur Erzeugung einer Vormischung nach einem der Ansprüche 22 bis 24, worin eine Frequenz der Pulsverbrennung 50 bis 1200 Hz und eine Temperatur einer Trocknungskammer zum Sprühen des Latexes 140°C oder weniger ist.

26. Vormischung, erzeugt durch ein Verfahren nach einem der Ansprüche 22 bis 25.

27. Anlage zum Mischen und Trocknen von zumindest zwei Ausgangsflüssigkeiten oder Dispersionen für Feststoffsubstanzen, umfassend Pumpen zum Zuführen von zumindest zwei Ausgangsflüssigkeiten, einen Kontrollmechanismus zum Steuern eines Zuführverhältnisses der Pumpen, zumindest zwei Ausgangsflüssigkeit-Zuführleitungen zum Zuführen von zumindest zwei Ausgangsflüssigkeiten bei irgendeinem Verhältnis, und eine Pulsverbrennungsanlage zum Sprühen, nach dem Kombinieren der zumindest zwei Ausgangsflüssigkeit-Zuführleitungen in eine einzelne Zuführleitung, der kombinierten Leitungen und Trocknen der Mischung unter einer Atmosphäre einer Schockwelle, die von einer Pulsverbrennung erzeugt ist.

28. Trocknungsanlage nach Anspruch 27, worin die zumindest zwei Ausgangsleitungen ein natürlicher Kautschuklatex und eine wässrige Aufschlämmung von Ruß sind.

## Revendications

1. Procédé pour produire une composition de caoutchouc naturel contenant un agent de remplissage comprenant simultanément la pulvérisation et le séchage d'un liquide contenant un composant de caoutchouc naturel et un liquide contenant un agent de remplissage sous une atmosphère d'une onde de choc générée à partir d'une combustion pulsée.

2. Procédé pour produire une composition de caoutchouc naturel selon la revendication 1, comprenant en outre le mélange de l'agent de remplissage ou d'un liquide contenant un agent de remplissage avec le liquide contenant ledit composant de caoutchouc naturel, avant la pulvérisation, et ensuite sa pulvérisation sous une atmosphère d'une onde de choc générée à partir d'une combustion pulsée.

3. Procédé pour produire une composition de caoutchouc naturel selon la revendication 1 ou 2, dans lequel l'agent de remplissage est au moins un agent de remplissage sélectionné dans le groupe constitué par du noir de carbone, de la silice, du silicate de sodium, de la silice colloïdale, de l'argile et du carbonate de calcium.

4. Procédé pour produire une composition de caoutchouc naturel selon l'une quelconque des revendications 1 à 3, dans lequel le mélange de composition de caoutchouc naturel avant séchage a une viscosité à 25 °C de 3 000 mPa·s ou moins.

5. Procédé pour produire une composition de caoutchouc naturel selon l'une quelconque des revendications 1 à 5, dans lequel une fréquence de la combustion pulsée est de 50 à 1 200 Hz et une température d'une chambre de séchage de l'atmosphère de l'onde de choc générée à partir d'une combustion pulsée pour pulvériser le liquide contenant une composition de caoutchouc naturel est de 140 °C ou moins.

6. Composition de caoutchouc naturel produite par le procédé selon l'une quelconque des revendications 1 à 5.

7. Procédé pour produire un mélange maître de caoutchouc naturel / noir de carbone comprenant le mélange, en un latex de caoutchouc naturel, d'une pâte aqueuse de noir de carbone contenant 1 à 200 parties en poids de noir de carbone, sur base de 100 parties en poids, en termes d'un solide, du caoutchouc et 1 à 30 % en poids d'un agent de surface sur base du poids du noir de carbone (teneur en solides), ensuite la pulvérisation et le séchage du mélange ainsi obtenu sous une atmosphère d'une onde de choc générée à partir d'une combustion pulsée.

8. Procédé pour produire un mélange maître selon la revendication 7, dans lequel l'agent de surface est mélangé, à l'avance avec au moins un d'un latex de caoutchouc naturel et d'une pâte aqueuse de noir de carbone, suivi par l'agitation et le mélange du latex de caoutchouc naturel et de la pâte de noir de carbone.

9. Procédé pour produire un mélange maître selon la revendication 7 ou 8, dans lequel l'agent de surface est un agent de surface non ionique ou un agent de surface cationique.

10. Procédé selon la revendication 9, dans lequel une viscosité à 25 °C du mélange avant séchage est de 3 000 mPa·s ou moins.

11. Procédé pour produire un mélange maître selon l'une quelconque des revendications 7 à 10, dans lequel une fréquence de la combustion pulsée est de 50 à 1 200 Hz et une température d'une chambre de séchage sous l'atmosphère de l'onde de choc générée à partir d'une combustion pulsée pour pulvériser le latex est de 140 °C ou moins.

12. Procédé pour produire un mélange maître selon l'une quelconque des revendications 7 à 11, dans lequel le mélange contient en outre au moins un agent de composition sélectionné dans le groupe constitué par des agents de vulcanisation, des accélérateurs de vulcanisation, des antioxydants, des oxydes métalliques, des acides gras, des résines et des huiles.

13. Mélange maître produit par un procédé selon l'une quelconque des revendications 7 à 12.

14. Procédé pour produire un mélange maître de caoutchouc naturel / noir de carbone comprenant le mélange, en un latex de caoutchouc naturel, d'une pâte aqueuse de noir de carbone et d'un polymère hydrosoluble, ensuite la pulvérisation et le séchage du mélange ainsi obtenu sous une atmosphère d'une onde de choc générée à partir d'une combustion pulsée.

15. Procédé pour produire un mélange maître selon la revendication 14, comprenant en outre le mélange, en au moins un latex de caoutchouc naturel et la pâte aqueuse de noir de carbone, du polymère hydrosoluble et ensuite l'agitation et le mélange du latex et de la pâte de noir de carbone.

16. Procédé pour produire un mélange maître selon la revendication 14 ou 15, dans lequel le polymère hydrosoluble est de l'alcool de polyvinyle (PVA), un dérivé de cellulose hydrosoluble ou un sel de ceux-ci.

17. Procédé pour produire un mélange maître selon la revendication 16, dans lequel un degré d'éthérification du dérivé de cellulose hydrosoluble est de 0,5 à 1,6.

18. Procédé pour produire un mélange maître selon la revendication 16 ou 17, dans lequel une viscosité à 25 °C du mélange est de 3 000 mPa·s ou moins.

19. Procédé pour produire un mélange maître selon l'une quelconque des revendications 14 à 18, dans lequel une fréquence de la combustion pulsée est de 50 à 1 200 Hz et une température d'une chambre de séchage pour pulvériser le latex est de 140 °C ou moins.

20. Procédé pour produire un mélange maître selon l'une quelconque des revendications 14 à 19, dans lequel le mélange contient en outre au moins un agent de composition sélectionné dans le groupe constitué par des agents de vulcanisation, des accélérateurs de vulcanisation, des antioxydants, des oxydes métalliques, des acides gras, des résines et des huiles.

21. Mélange maître produit par un procédé selon l'une quelconque des revendications 14 à 20.

22. Procédé pour produire un mélange maître de caoutchouc naturel / noir de carbone en mélangeant un latex de caoutchouc naturel et une pâte aqueuse de noir de carbone, suivi par un séchage, comprenant l'alimentation séparée du latex de caoutchouc naturel et de la pâte de noir de carbone à partir d'au moins deux lignes d'alimentation en matière de départ, qui sont combinées en une seule ligne, et ensuite la pulvérisation et le séchage du mélange sous une atmosphère d'une onde de choc générée à partir d'une combustion pulsée.

23. Procédé pour produire un mélange maître selon la revendication 22, dans lequel une durée après la combinaison des lignes d'alimentation en matière de départ en une seule ligne, puis la pulvérisation du mélange sous une atmosphère d'une onde de choc générée à partir d'une combustion pulsée est de 0,1 à 10 secondes.

24. Procédé pour produire un mélange maître selon la revendication 22 ou 23, dans lequel des viscosités à 25 °C du latex de caoutchouc naturel et de la pâte aqueuse de noir de carbone sont respectivement de 3 000 mPa·s ou moins.

25. Procédé pour produire un mélange maître selon l'une quelconque des revendications 22 à 24, dans lequel une fréquence de la combustion pulsée est de 50 à 1 200 Hz et une température d'une chambre de séchage pour pulvériser le latex est de 140 °C ou moins.

26. Mélange maître produit par un procédé selon l'une quelconque des revendications 22 à 25.

27. Appareil pour mélanger et sécher au moins deux liquides de départ ou dispersions de substances solides, comprenant des pompes pour amener au moins deux liquides de départ, un mécanisme de commande pour commander un rapport d'alimentation des pompes, au moins deux lignes d'alimentation de liquide de départ pour alimenter au moins deux liquides de départ à n'importe quel rapport, et un appareil de combustion pulsée pour pulvériser, après la combinaison des au moins deux lignes d'alimentation de liquide de départ en la seule ligne d'alimentation, les liquides combinés et pour sécher le mélange sous une atmosphère d'une onde de choc générée à partir d'une combustion pulsée.

28. Appareil de séchage selon la revendication 27, dans lequel lesdits au moins deux liquides de départ sont un latex de caoutchouc naturel et une pâte aqueuse de noir de carbone.
